(19) Europäisches Patentamt
European Patent Office
Office européen des brevets

(11) **EP 3 907 538 B1**

(12) **EUROPEAN PATENT SPECIFICATION**

(45) Date of publication and mention of the grant of the patent:
**23.10.2024 Bulletin 2024/43**

(51) International Patent Classification (IPC):
**G02B 6/036** (2006.01)　　**G02B 6/02** (2006.01)
**G02B 6/028** (2006.01)

(21) Application number: **19932669.5**

(52) Cooperative Patent Classification (CPC):
**G02B 6/03666; G02B 6/0283;** G02B 6/02366

(22) Date of filing: **13.12.2019**

(86) International application number:
**PCT/CN2019/124965**

(87) International publication number:
**WO 2020/248552 (17.12.2020 Gazette 2020/51)**

(54) **ULTRA-LOW ATTENUATION LARGE EFFECTIVE AREA SINGLE-MODE OPTICAL FIBRE**

EINZELMODUSGLASFASER MIT EXTREM NIEDRIGER DÄMPFUNG UND GROSSER WIRKFLÄCHE

FIBRE OPTIQUE MONOMODE À GRANDE SURFACE EFFECTIVE À ATTÉNUATION ULTRA-FAIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2019 CN 201910507964**

(43) Date of publication of application:
**10.11.2021 Bulletin 2021/45**

(73) Proprietors:
• **Fiberhome Telecommunication Technologies Co., Ltd**
**Wuhan, Hubei 430000 (CN)**
• **Ruiguang Telecommunication Technologies Co., Ltd.**
**Wuhan, Hubei 430074 (CN)**
• **Fiberhome Fujikura Optic Technology Co., Ltd**
**Wuhan, Hubei 430000 (CN)**

(72) Inventors:
• **LUO, Wenyong**
**Wuhan, Hubei 430000 (CN)**
• **YU, Huang**
**Wuhan, Hubei 430000 (CN)**
• **WU, Shujian**
**Wuhan, Hubei 430000 (CN)**
• **LI, Wei**
**Wuhan, Hubei 430000 (CN)**
• **YU, Zhiqiang**
**Wuhan, Hubei 430000 (CN)**
• **DU, Cheng**
**Wuhan, Hubei 430000 (CN)**
• **KE, Yili**
**Wuhan, Hubei 430000 (CN)**
• **ZHANG, Tao**
**Wuhan, Hubei 430000 (CN)**
• **ZHU, Qiao**
**Wuhan, Hubei 430000 (CN)**
• **ZENG, Fanqiu**
**Wuhan, Hubei 430000 (CN)**

(74) Representative: **Lohmanns Lohmanns & Partner mbB**
**Benrather Schlossallee 49-53**
**40597 Düsseldorf (DE)**

(56) References cited:
**CN-A- 102 200 610　　CN-A- 104 169 761
CN-A- 104 898 200　　CN-A- 105 891 947
CN-A- 106 291 808　　CN-A- 107 257 933
CN-A- 107 721 149　　CN-A- 109 683 232
CN-A- 110 221 382　　JP-A- 2003 029 062
US-A1- 2004 042 748　　US-A1- 2016 154 175
US-A1- 2017 371 096　　US-B1- 7 283 714
US-B1- 7 283 714**

**Description**

**Field of the Invention**

The invention relates to the technical field of single-mode optical fibers, in particular to a single-mode optical fiber with ultra-low attenuation and a large effective area.

**Background of the Invention**

With the development of 4G era to 5G era, the Internet will develop towards Internet of Everything, from the interconnection of people to the interconnection of people and things, and to the interconnection of things and things, so the amount of data generated from which has a qualitative leap. Optical fiber communication technology is the most representative information technology. As the core basic material of optical communication, optical fiber is an indispensable part in the optical communication system, the technical level thereof is related to the development of optical communication system transmission capacity. With the development of social informatization, the traditional optical fiber technology has been unable to meet the rapid development needs of information capacity.

As the optical fiber communication network develops toward ultra-long distance, ultra-large capacity, and ultra-high speed, the new 400G or even ultra-400G technology requires the optical fiber technology to advance to its own limit, so as to make the attenuation of the optical fiber lower, and make the effective area capable of maintaining single-mode transmission larger, thereby allowing more optical to enter the optical fiber and pass through the optical fiber with lower loss.

For conventional communication optical fibers, the refractive index of the core layer needs to be higher than that of the cladding layer to form a total reflection, so that optical signals can be transmitted. Therefore, the core layer of the silica optical fiber is usually doped with germanium which can increase the refractive index, and the cladding layer coating the core layer is pure quartz.

However, the optical fiber technology with ultra-low loss is just the opposite, which requires a purer quartz core layer, and the cladding layer is doped with substances such as fluorine which can reduce the refractive index.

Since the pure quartz core layer has a higher melting point than the fluorine-doped cladding layer, stress will be generated at the core-cladding interface during fusion molding, resulting in the increase of the attenuation of the optical fiber.

In addition, the design, combining the pure quartz core layer with the fluorine-doped cladding layer, adopted by the ultra-low attenuation optical fiber, is difficult to achieve large-mode field optical fiber transmission, so that the nonlinear effect is hard to reduce during large-capacity transmission, and the application prospect of the ultra-low attenuation optical fiber in large-capacity communication transmission technology is therefore limited.

In order to meet the requirements of ultra-large capacity optical fiber communication transmission technology, a new type of ultra-low attenuation and a large effective area single-mode optical fiber technology is required to develop.

US 7,283,714 B1 discloses a large mode area optical fiber. The optical fiber includes a large diameter core (d1 up to 60 μm), and a first cladding (diameter d2) wherein the difference between refractive index (n1) in the core and the first cladding (n2) is very small ($\Delta$n<0.002), thus providing a very low numerical aperture core (NA1 between 0.02 and 0.06). The preferred ratio of d2/d1<2. The fiber further has a second cladding, preferably a layer of air holes, having a very low refractive index n3 as compared to the core and first cladding such that the first cladding has a relatively high numerical aperture (NA2>0.4) (n3 is preferably less than 1.3). The small change in refractive index between the core and inner cladding combined with a large change in refractive index between the first cladding and second cladding provides a significantly improved single mode holding waveguide.

US 2016/154175 A1 discloses optical transmission systems and methods that utilize a QSM optical fiber with a large effective area and that supports only two modes, namely the fundamental mode and one higher-order mode. The optical transmission system includes a transmitter and a receiver optically coupled by an optical fiber link that includes at least one section of the QSM optical fiber. Transmission over optical fiber link gives rise to MPI, which is mitigated using a digital signal processor. The QSM optical fiber is designed to have an amount of DMA that allows for the digital signal processor to have reduced complexity as reflected by a reduced number of filter taps as compared to if the DMA were zero.

US 2017/371096 A1 discloses an optical fiber containing alkali metal elements or the like in which Rayleigh scattering loss can be reduced. An optical fiber includes a core composed of silica glass and a cladding which surrounds the core, has a refractive index lower than a refractive index of the core, and is composed of silica glass containing fluorine. The core contains a first group of dopants and a second group of dopants having a diffusion coefficient lower than a diffusion coefficient of the first group of dopants. The difference between the maximum value and the minimum value of residual stress in the optical fiber is 150 MPa or less.

**Summary of the Invention**

In view of the defects existing in the prior art, the purpose of the present invention is to provide a single-mode optical fiber, which not only has the characteristics of ultra-low attenuation and a large effective area, but also can implement large-mode field optical fiber transmission and reduce the nonlinear effect of large-capacity transmission.

In order to achieve the above purpose, the present invention adopts the following technical solution: a single-mode optical fiber with ultra-low attenuation and a large effective area, comprising a core layer, a first cladding layer, a second cladding layer, a third cladding layer and a fourth cladding layer successively arranged from inside to outside;

the first cladding layer is made from fluorine-doped quartz;

the second cladding layer, the third cladding layer and the fourth cladding layer are all made from quartz;

the third cladding layer is provided with at least one annular microporous layer successively arranged from inside to outside, the annular microporous layer comprises a plurality of micropores which are evenly distributed, the circle center of each micropore in each annular microporous layer is concyclic and the circle is concentric with the core layer;

the core layer is made from alkali metal-doped quartz, and the core layer comprises an inner core layer and a transition core layer successively arranged from inside to outside;

the refractive indices of the transition core layer and the fourth cladding layer are $n_{11}$ and $n_5$, respectively, and the

$$\Delta n_{11} = -\frac{ax^2}{100} \lg a^x$$

relative refractive index difference $\Delta n_{11}$ between $n_{11}$ and $n_5$ satisfies , wherein a is the transition coefficient of the transition core layer, and x is the distance from any point in the transition core layer to the edge of the inner core layer;

the value range of a is $1.05 \leq a \leq 1.3$;

the value range of x is $0 < x \leq d_{11}$, and $1.25 \mu m \leq d_{11} \leq 2.50 \mu m$, wherein $d_{11}$ is the thickness of the transition core layer.

Further, the diameter of the core layer is $d_1$;

the value range of the ratio of the outer diameter $d_2$ of the first cladding layer to $d_1$ is $5 \leq d_2/d_1 \leq 8$;

the value range of the ratio of the thickness $d_3$ of the second cladding layer to $d_1$ is $0.2 \leq d_3/d_1 \leq 0.5$;

the value range of the ratio of the thickness cf of the third cladding layer to $d_1$ is $1.0 \leq d_4/d_1 \leq 3.0$; at the same time,

when $d_2/d_1$ takes the maximum value, $d_3/d_1$ and $d_4/d_1$ take the minimum value; and when $d_2/d_1$ takes the minimum value, $d_3/d_1$ and $d_4/d_1$ take the maximum value.

Further, the value range of the diameter $d_1$ of the core layer is $8.5 \ \mu m \leq d_1 \leq 13 \ \mu m$.

Further, the value range of the ratio of the diameter $d_{40}$ of the micropore to the thickness $d_4$ of the third cladding layer is $0.25/m \leq d_{40}/d_4 \leq 0.4/m$, wherein m is the total number of the annular microporous layers.

Further, in each annular microporous layer, the diameter of the micropore is $d_{40}$, the distance between two adjacent micropores is h, an included angle formed by the lines respectively connecting the circle centers of the two adjacent micropores with the circle center of the core layer is $\alpha$, the distance of the circles centers between the micropore and the core layer is L, then h satisfies the following formula: $h = 2L\sin(\alpha/2) - d_{40}$, and the distance h between two adjacent micropores in different annular microporous layers is equal.

Further, the value range of the included angle $\alpha$ is $15° \leq \alpha \leq 30°$.

Further, the inner core layer, the second cladding layer and the fourth cladding layer have the same refractive index.

Further, the alkali metal is at least one of potassium and lithium.

Further, the diameter $d_5$ of the fourth cladding layer is 125 $\mu m$ or 124 $\mu m$.

Further, the diameter of a coated single-mode optical fiber is $235 \mu m \sim 260 \mu m$.

Further, when a working wavelength is 1550nm, an attenuation of the single-mode optical fiber reaches 0.150dB/km, a mode field diameter reaches 13.5$\mu$m, and a minimum bending radius reaches 10mm when an additional loss is less than 0.2dB.

Compared with the prior art, the present invention has the following advantages.

The single-mode optical fiber provided by the present invention adopts a method of a core layer doped with alkali metal + a cladding layer doped with fluorine and combining with annular micropores. Compared with the method of a pure quartz core layer + a cladding layer doped with fluorine, the optical signal is better confined within the core diameter on the basis of solving the stress matching, thereby achieving a large mode field while reducing the dissipation of high-order modes, ensuring the transmission efficiency of the fundamental mode, not only meeting the characteristics of ultra-low attenuation and a large effective area and being able to achieve optical signal transmission with a larger mode field under ultra-low attenuation, but also having good bending performance, not only reducing the nonlinearity of large-capacity transmission, but also applying the ultra-low attenuation optical fiber to fields such as access networks and fiber-to-the-home that have higher requirements for the optical fiber bending performance, thereby effectively expanding the application prospect of the ultra-low attenuation optical fiber in large-capacity communication transmission technology, realizing the application of the ultra-low attenuation optical fiber in the entire optical fiber communication network, and truly realizing the optical fiber technology upgrade of the existing optical fiber communication network.

Doping fluorine in the first cladding layer, so as to make the refractive index of the core layer higher than that of the first cladding layer, and doping alkali metal in the core layer, so as to reduce the viscosity of the core layer without causing too much additional loss-absorbing material in the communication band, thereby achieving the viscosity matching of the core layer and the first cladding layer, avoiding the large stress between the core layer and the first cladding layer due to the mismatch of expansion on heating and contraction on cooling at high and low temperatures during the manufacturing process, and greatly reducing the loss of the optical passing through the core layer and meeting the requirements of the ultra-low loss.

The third cladding layer is further provided with an annular microporous layer, starting from the normalized frequency of the optical fiber, calculating and optimizing the micropore duty cycle conditions of the optical fiber under small bending conditions, and combining the co-dopant doping to reduce the viscosity to achieve the optimization of the core-cladding interface stress, thereby obtaining an ultra-low attenuation large effective area single-mode optical fiber with small bending radius. Due to the combination of normalized frequency and special small bending radius design, the single-mode optical fiber has good resistance to external stress.

When the working wavelength is 1550nm, the attenuation of the single-mode optical fiber reaches 0.150dB/km, the mode field diameter reaches 13.5$\mu$m, and the minimum bending radius reaches 10mm when the additional loss is less than 0.2dB. When the core diameter of the optical fiber is 10.0$\mu$m and below, the cut-off wavelength of the optical fiber is less than 1290nm, and the attenuation of the optical fiber at 1310nm reaches 0.29dB/km.

## Description of the Drawings

Fig. 1 is a schematic diagram of an end face structure of a single-mode optical fiber with ultra-low attenuation and a large effective area in the embodiment of the present invention;

Fig. 2 is a schematic diagram of a waveguide structure of a single-mode optical fiber with ultra-low attenuation and a large effective area in the embodiment of the present invention.

In the figures: 1-core layer; 10-inner core layer; 11-transition core layer; 2-the first cladding layer; 3-the second cladding layer; 4-the third cladding layer; 40-micropore; 5-the fourth cladding layer.

## Detailed Description of the Embodiments

The present invention will be further described below in detail with reference to the drawings in combination with the embodiments.

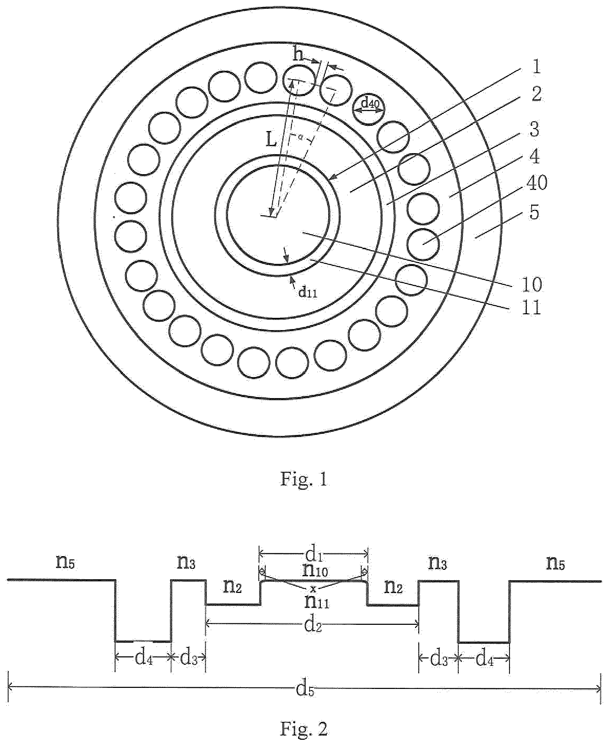

As shown in Fig. 1, the embodiment of the present invention provides a single-mode optical fiber with ultra-low attenuation and a large effective area. The single-mode optical fiber comprises a core layer 1, a first cladding layer 2, a second cladding layer 3, a third cladding layer 4 and a fourth cladding layer 5 successively arranged from inside to outside. The first cladding layer 2 is made from fluorine-doped quartz. The second cladding layer 3, the third cladding layer 4 and the fourth cladding layer 5 are all made from quartz.

As shown in Fig. 1, the third cladding layer 4 is provided with at least one annular microporous layer successively arranged from inside to outside. The annular microporous layer comprises a plurality of micropores 40 which are evenly distributed, each of the micropores 40 in each annular microporous layer is equally spaced and the circle center of each micropore 40 in each annular microporous layer is concyclic and the circle is concentric with the core layer 1.

The core layer 1 is made from alkali metal-doped quartz, and the alkali metal is at least one of potassium and lithium existing in the form of oxides in the quartz. The core layer 1 comprises an inner core layer 10 and a transition core layer 11 successively arranged from inside to outside.

As shown in Fig. 2, the refractive indices of the transition core layer 11 and the fourth cladding layer 5 are $n_{11}$

$$\Delta n_{11} = -\frac{ax^2}{100} \lg a^x$$

and $n_5$, respectively. The relative refractive index difference $\Delta n_{11}$ between $n_{11}$ and $n_5$ satisfies , wherein a is the transition coefficient of the transition core layer 11, the value range of a is $1.05 \leq a \leq 1.3$, and x is the distance from any point in the transition core layer 11 to the edge of the inner core layer 10. The relative refractive index difference $\Delta n_{11}$ of the transition core layer 11 adopts a design concept combining logarithmic with parabola, which makes the waveguide change smoother and has a better viscosity matching effect.

In this embodiment, the calculation method of the relative refractive index difference $\Delta$ adopts the formula:

$$\Delta = (n_{\text{refractive index}} - n_5)/n_{\text{refractive index}} * 100\%;$$

wherein $n_5$ is the refractive index of the fourth cladding layer 5. For the present invention, when calculating the relative refractive index difference $\Delta n_{11}$ between the refractive index $n_{11}$ of the transition core layer 11 and the refractive index $n_5$ of the fourth cladding layer 5, $n_{\text{refractive index}}$ in the formula is the refractive index $n_{11}$ of the transition core layer 11; when calculating the relative refractive index difference $\Delta n_2$ between the refractive index $n_2$ of the first cladding layer 2 and the refractive index $n_5$ of the fourth cladding layer 5, $n_{\text{refractive index}}$ in the formula is the refractive index $n_2$ of the first cladding layer 2, the refractive index $n_{10}$ of the inner core layer 10 and the refractive index $n_3$ of the second cladding layer 3 are the same as the refractive index $n_5$ of the fourth cladding layer 5.

In this embodiment, in order to satisfy total reflection and make the refractive index of the core layer 1 higher than that of the first cladding layer 2, the first cladding layer 2 can be doped with fluorine. After being doped with fluorine, the viscosity of the first cladding layer 2 will decrease, making the viscosity of the core-cladding have a large difference, and due to the mismatch of viscosity, the expansion on heating and contraction on cooling at high and low temperatures are not matched during the manufacturing process, resulting in relatively large stresses between the core layer 1 and the first cladding layer 2, then these stresses act on the core layer 1, greatly increasing the loss of the optical passing through the core layer 1. Therefore, in order to meet the ultra-low loss, the core layer 1 is doped with alkali metal to reduce the viscosity of the core layer 1, and at the same time, not to bring too much additional loss-absorbing material in the communication band, thereby achieving the viscosity matching of the core layer 1 and the first cladding layer 2.

In the embodiment, the third cladding layer 4 is further provided with an annular microporous layer. Starting from the normalized frequency of the optical fiber, the micropore duty cycle conditions of the optical fiber under small bending conditions are calculated and optimized, and the co-dopant doping is combined to reduce the viscosity to achieve the optimization of the core-cladding interface stress, thereby obtaining an ultra-low attenuation large effective area single-mode optical fiber with small bending radius. Due to the combination of normalized frequency and special small bending radius design, the single-mode optical fiber has good resistance to external stress.

The single-mode optical fiber provided by the present invention adopts a method of a core layer doped with alkali metal + a cladding layer doped with fluorine and combining with annular micropores. Compared with the method of a pure quartz core layer + a cladding layer doped with fluorine, the optical signal is better confined within the core diameter on the basis of solving the stress matching, thereby achieving a large mode field while reducing the dissipation of high-order modes, ensuring the transmission efficiency of the fundamental mode, not only meeting the characteristics of ultra-low attenuation and a large effective area and being able to achieve optical signal transmission with a larger mode field under ultra-low attenuation, but also having good bending performance, not only reducing the nonlinearity of large-capacity transmission, but also applying the ultra-low attenuation optical fiber to fields such as access networks and fiber-to-the-home that have higher requirements for the optical fiber bending performance, thereby effectively expanding the application prospect of the ultra-low attenuation optical fiber in large-capacity communication transmission technology, realizing the application of the ultra-low attenuation optical fiber in the entire optical fiber communication network, and truly realizing the optical fiber technology upgrade of the existing optical fiber communication network.

When the working wavelength is 1550nm, the attenuation of the single-mode optical fiber reaches 0.150dB/km, the mode field diameter reaches 13.5μm, and the minimum bending radius reaches 10mm when the additional loss is less than 0.2dB.

This embodiment also realizes the development of a full-band ultra-low attenuation optical fiber with a low cut-off wavelength, so that the cut-off wavelength of the optical fiber is less than 1290nm, and the attenuation of the optical fiber at 1310nm reaches 0.29dB/km, thereby better meeting the development needs of the ultra-large-capacity optical fiber communication transmission.

In the above formula, the value of x is related to the thickness of the transition core layer 11. Specifically, the value range of x is $0 < x \leq d_{11}$, and $1.25 \mu m \leq d_{11} \leq 2.50 \mu m$, wherein $d_{11}$ is the thickness of the transition core layer 11, as shown in Fig. 1.

As shown in Fig. 2, the diameter of the core layer 1 is $d_1$, and the value range is $8.5 \mu m \leq d_1 \leq 13 \mu m$;

the value range of the ratio of the outer diameter $d_2$ of the first cladding layer 2 to $d_1$ is $5 \leq d_2/d_1 \leq 8$;

the value range of the ratio of the thickness $d_3$ of the second cladding layer 3 to $d_1$ is $0.2 \leq d_3/d_1 \leq 0.5$;

the value range of the ratio of the thickness $d_4$ of the third cladding layer 4 to $d_1$ is $1.0 \leq d_4/d_1 \leq 3.0$; at the same time, when $d_2/d_1$ takes the maximum value, $d_3/d_1$ and $d_4/d_1$ take the minimum value, and when $d_2/d_1$ takes the minimum value, $d_3/d_1$ and $d_4/d_1$ take the maximum value.

As shown in Fig. 1, the value range of the ratio of the diameter $d_{40}$ of the micropore 40 to the thickness $d_4$ of the third cladding layer 4 is $0.25/m \leq d_{40}/d_4 \leq 0.4/m$, wherein m is the total number of the annular microporous layers.

For example, when m=1, that is, when there is only one annular microporous layer, the value range of the ratio of the diameter $d_{40}$ of the micropore 40 to $d_4$ is $0.25 \leq d_{40}/d_4 \leq 0.4$;
when m=2, that is, when there are two annular microporous layers, the micropores 40 in each annular microporous layer have the same size, and the value range of the ratio of the diameter $d_{40}$ of the micropore 40 to $d_4$ is $0.125 \leq d_{40}/d_4 \leq 0.2$; when m is other numbers, and so on.

In the third cladding layer 4, one or more annular microporous layers are involved. For the distance between two adjacent micropores 40 in the first annular microporous layer, the distance is determined by the included angle between the circle centers of the two micropores 40 and the circle center of the core layer 1 and the distance of the circles centers between the micropore 40 and the core layer 1.

Specifically, as shown in Fig. 1: in each annular microporous layer, the diameter of the micropore 40 is $d_{40}$, the distance between two adjacent micropores 40 is h, the included angle formed by the lines respectively connecting the circle centers of the two adjacent micropores 40 with the circle center of the core layer 1 is $\alpha$, and the distance of the circles centers between the micropore 40 and the core layer 1 is L. Then h satisfies the following formula: $h = 2L\sin(\alpha/2) - d_{40}$, and the distance between two adjacent micropores 40 in different annular microporous layers is equal, that is, after the distance h between two adjacent micropores 40 in the first layer of annular microporous layer is determined, the distance h between two adjacent micropores 40 in each annular microporous layer of the second layer, third layer, etc. is equal to the distance h between two adjacent micropores 40 in the first layer of annular microporous layer.

The value range of the included angle $\alpha$ is $15° \leq \alpha \leq 30°$.

In addition, when the total number of annular microporous layers m>2, the distance between two adjacent annular microporous layers is equal to the distance h between two adjacent micropores 40.

Because the single-mode optical fiber provided by the present invention has good resistance to external stress, the diameter of the fourth cladding layer 5 is usually $125 \mu m$, and when the fourth cladding layer 5 is used in occasions where frequent butting is required, the diameter thereof can be controlled at $124 \mu m$, then a coating material (tight coating) that tightly adheres to quartz is coated, the diameter of the optical fiber is coated to $125 \mu m$, then two coats of polyacrylic resin are performed to form a coating layer, which can still maintain good attenuation characteristics, and the diameter of the coated single-mode optical fiber is $235 \mu m \sim 260 \mu m$; in the subsequent use, only the polyacrylic resin coating layer needs to be stripped, since the quartz optical fiber still has a coating material to protect it from outside air, moisture and dust, it is not necessary to connect the two optical fibers by thermal fusion, but only need to fix the connector through the cold connection of the connector to ensure the good use of the optical fiber.

The present invention will be further described below in detail in combination with embodiments and drawings.

When the diameter of the fourth cladding layer 5 is $125 \mu m$, 8 types of optical fibers are implemented. The specific parameters are shown in Table 1 below.

Table 1 Embodiments with Diameter of Fourth Cladding Layer of $125 \mu m$

| | Optical Fiber 1 | Optical Fiber 2 | Optical Fiber 3 | Optical Fiber 4 | Optical Fiber 5 | Optical Fiber 6 | Optical Fiber 7 | Optical Fiber 8 |
|---|---|---|---|---|---|---|---|---|
| Diameter $d_1$ of Core Layer 1 ($\mu m$) | 8.5 | 8.5 | 8.5 | 10.0 | 11.0 | 10.5 | 13.0 | 13.0 |

(continued)

| | Optical Fiber 1 | Optical Fiber 2 | Optical Fiber 3 | Optical Fiber 4 | Optical Fiber 5 | Optical Fiber 6 | Optical Fiber 7 | Optical Fiber 8 |
|---|---|---|---|---|---|---|---|---|
| Thickness $d_{11}$ of Transition Core Layer 11 ($\mu$m) | 2.5 | 1.6 | 1.25 | 1.25 | 1.5 | 2.5 | 2.5 | 1.25 |
| Transition Coefficient a | 1.05 | 1.16 | 1.3 | 1.3 | 1.2 | 1.05 | 1.05 | 1.3 |
| $d_2/d_1$ | 5 | 7 | 8 | 5 | 6 | 8 | 5.2 | 6 |
| $d_3/d_1$ | 0.5 | 0.3 | 0.2 | 0.5 | 0.3 | 0.2 | 0.4 | 0.3 |
| $d_4/d_1$ | 3 | 2 | 1 | 3 | 2 | 1 | 1.5 | 1.2 |
| $\alpha$ | 15° | 20° | 30° | 20° | 15° | 30° | 15° | 30° |
| Number of Annular Microporous Layers m | 1 | 2 | 3 | 1 | 2 | 3 | 1 | 2 |
| Diameter of Micropore 40 $d_{40}/d_4$ | 25% | 30% | 40% | 40% | 25% | 30% | 40% | 25% |
| Diameter of Coating Layer ($\mu$m) | 235 | 245 | 260 | 260 | 235 | 250 | 235 | 260 |

The optical fiber thus obtained has the attenuation of 0.150dB/km at 1550nm, the mode field diameter of 13.5$\mu$m, and the minimum bending radius of 10mm when the additional loss is less than 0.2dB at 1550nm; wherein when the core diameter of the optical fiber is 10.0$\mu$m and below, the cut-off wavelength of the optical fiber is less than 1290nm, and the attenuation of the optical fiber at 1310nm reaches 0.29dB/km.

Combining the normalized frequency and special small bending radius design, the optical fiber can have good resistance to external stress. In the occasions where frequent butting is required, the diameter of the quartz cladding layer of the optical fiber can be controlled at 124$\mu$m, then a coating material that tightly adheres to the quartz is coated, the diameter of the optical fiber is coated to 125 $\mu$m, then two coats of polyacrylic resin are performed, which can still maintain good attenuation characteristics; in the subsequent use, only the polyacrylic resin coating layer needs to be stripped, since the quartz optical fiber still has a coating material to protect it from outside air, moisture and dust, it is not necessary to connect the two optical fibers by thermal fusion, but only need to fix the connector through the cold connection of the connector to ensure the good use of the optical fiber.

When the diameter of the fourth cladding layer 5 is 124$\mu$m, three types of optical fibers are implemented. The specific parameters are shown in Table 2 below.

Table 2 Embodiments with Diameter of Fourth Cladding Layer of 124$\mu$m

| | Optical Fiber 9 | Optical Fiber 10 | Optical Fiber 11 |
|---|---|---|---|
| Diameter $d_1$ of Core Layer 1 ($\mu$m) | 8.5 | 9 | 10 |
| Thickness $d_{11}$ of Transition Core Layer 11 ($\mu$m) | 1.25 | 1.7 | 2.5 |
| Transition Coefficient a | 1.3 | 1.15 | 1.05 |
| $d_2/d_1$ | 8 | 7 | 5 |
| $d_3/d_1$ | 0.2 | 0.3 | 0.5 |
| $d_4/d_1$ | 1 | 2 | 3 |
| $\alpha$ | 15° | 20° | 30° |
| Number of Annular Micropore Layers m | 4 | 3 | 3 |
| Diameter of Micropore 40 $d_{40}/d_4$ | 25% | 30% | 40% |
| Diameter after Tight Coating ($\mu$m) | 125.1 | 125.2 | 124.9 |

(continued)

|  | Optical Fiber 9 | Optical Fiber 10 | Optical Fiber 11 |
|---|---|---|---|
| Diameter of Coating Layer ($\mu$m) | 245.2 | 240.3 | 246.5 |

The optical fiber thus obtained has the cut-off wavelength of less than 1290nm, the attenuation of 0.29dB/km at 1310nm, 0.150dB/km at 1550nm, and the minimum bend radius of 10mm when the additional loss of less than 0.2dB at 1550nm; under the condition of ensuring the attenuation of the optical fiber, the present invention can realize an optical fiber butting that can be adapted to rapid cold butting, thereby being suitable for rapid installation and use in special occasions.

The present invention is not limited to the above-mentioned embodiments. One skilled in the art may make a number of improvements and modifications are also considered to be within the protection scope of the present invention. The contents that are not described in detail in the description belong to the prior art well known by one skilled in the art.

**Claims**

1. A single-mode optical fiber with ultra-low attenuation and a large effective area, comprising: a core layer (1), a first cladding layer (2), a second cladding layer (3), a third cladding layer (4) and a fourth cladding layer (5) successively arranged from inside to outside;
   wherein

   the first cladding layer (2) is made from fluorine-doped quartz;
   the second cladding layer (3), the third cladding layer (4) and the fourth cladding layer (5) are all made from quartz;
   the third cladding layer (4) is provided with at least one annular microporous layer successively arranged from inside to outside,
   the at least one annular microporous layer comprises a plurality of micropores (40) which are evenly distributed,
   the circle center of each micropore (40) in each annular microporous layer is concyclic and the circle is concentric with the core layer (1);
   the core layer (1) is made from alkali metal-doped quartz, and the core layer (1) comprises an inner core layer (10) and a transition core layer (11) successively arranged from inside to outside;
   **characterised in that**
   the refractive indices of the transition core layer (11) and the fourth cladding layer (5) are $n_{11}$ and $n_5$, respectively,

   and the relative refractive index difference $\Delta n_{11}$ between $n_{11}$ and $n_5$ satisfies $\Delta n_{11} = -\dfrac{ax^2}{100} \lg a^x$ , wherein a is the transition coefficient of the transition core layer (11), and x is the distance from any point in the transition core layer (11) to the edge of the inner core layer (10);
   wherein the value range of a is $1.05 \leq a \leq 1.3$;
   wherein the value range of x is $0 < x \leq d_{11}$, and $1.25\mu m \leq d_{11} \leq 2.50\mu m$, wherein $d_{11}$ is the thickness of the transition core layer (11).

2. The single-mode optical fiber with ultra-low attenuation and a large effective area according to claim 1, wherein

   the diameter of the core layer (1) is $d_1$;
   the value range of the ratio of the outer diameter $d_2$ of the first cladding layer (2) to $d_1$ is $5 \leq d_2/d_1 \leq 8$;
   the value range of the ratio of the thickness $d_3$ of the second cladding layer (3) to $d_1$ is $0.2 \leq d_3/d_1 \leq 0.5$;
   the value range of the ratio of the thickness $d_4$ of the third cladding layer (4) to $d_1$ is $1.0 \leq d_4/d_1 \leq 3.0$; at the same time, when $d_2/d_1$ takes the maximum value, $d_3/d_1$ and $d_4/d_1$ take the minimum value; and when $d_2/d_1$ takes the minimum value, $d_3/d_1$ and $d_4/d_1$ take the maximum value.

3. The single-mode optical fiber with ultra-low attenuation and a large effective area according to claim 2, wherein value range of the diameter $d_1$ of the core layer (1) is $8.5 \ \mu m \leq d_1 \leq 13 \ \mu m$.

4. The single-mode optical fiber with ultra-low attenuation and a large effective area according to claim 1, wherein the value range of the ratio of the diameter $d_{40}$ of each micropore (40) to the thickness $d_4$ of the third cladding layer (4)

is 0.25/m≤$d_{40}$/$d_4$≤0.4/m, wherein m is the total number of the annular microporous layers.

5. The single-mode optical fiber with ultra-low attenuation and a large effective area according to claim. 1, wherein in each annular microporous layer, the diameter of each micropore (40) is $d_{40}$, the distance between two adjacent micropores (40) is h, an included angle formed by the lines respectively connecting the circle centers of the two adjacent micropores (40) with the circle center of the core layer (1) is $\alpha$, the distance of the circles centers between each micropore (40) and the core layer (1) is L, then h satisfies the following formula: h=2Lsin($\alpha$/2)-$d_{40}$, and the distance h between two adjacent micropores (40) in different annular microporous layers is equal.

6. The single-mode optical fiber with ultra-low attenuation and a large effective area according to claim 5, wherein the value range of the included angle $\alpha$ is 15°≤$\alpha$≤30°.

7. The single-mode optical fiber with ultra-low attenuation and a large effective area according to claim 1, wherein the inner core layer (10), the second cladding layer (3) and the fourth cladding layer (5) have the same refractive index.

8. The single-mode optical fiber with ultra-low attenuation and a large effective area according to claim 1, wherein the alkali metal is at least one of potassium and lithium.

9. The single-mode optical fiber with ultra-low attenuation and a large effective area according to claim 1, wherein the diameter $d_5$ of the fourth cladding layer (5) is 125 $\mu$m or 124 $\mu$m.

10. The single-mode optical fiber with ultra-low attenuation and a large effective area according to claim 1, wherein the diameter of a coated single-mode optical fiber is 235$\mu$m~260$\mu$m.

11. The single-mode optical fiber with ultra-low attenuation and a large effective area according to claim 1, wherein when a working wavelength is 1550nm, an attenuation of the single-mode optical fiber reaches 0.150dB/km, a mode field diameter reaches 13.5$\mu$m, and a minimum bending radius reaches 10mm when an additional loss is less than 0.2dB.

**Patentansprüche**

1. Single-Mode-Glasfaser mit ultraniedriger Dämpfung und einer großen effektiven Fläche, umfassend: eine Kernschicht (1), eine erste Mantelschicht (2), eine zweite Mantelschicht (3), eine dritte Mantelschicht (4) und eine vierte Mantelschicht (5), nacheinander von innen nach außen angeordnet;

wobei die erste Mantelschicht (2) aus einem Fluor-dotierten Quarz hergestellt ist;
wobei die zweite Mantelschicht (3), die dritte Mantelschicht (4) und die vierte Mantelschicht (5) allesamt aus Quarz hergestellt sind;
wobei die dritte Mantelschicht (4) mit mindestens einer ringförmigen mikroporösen Schicht, die von innen nach außen angeordnet sind, versehen ist,
wobei mindestens eine ringförmige mikroporöse Schicht eine Vielzahl von Mikroporen (40), die gleichmäßig verteilt sind, umfasst, wobei der Kreismittelpunkt von jeder Mikropore (40) in jeder ringförmigen mikroporösen Schicht konzyklisch ist und der Kreis mit der Kernschicht (1) konzentrisch ist;
wobei die Kernschicht (1) aus Alkalimetall-dotiertem Quarz hergestellt ist und die Kernschicht (1) eine innere Kernschicht (10) und eine Übergangskernschicht (11), die nacheinander von innen nach außen angeordnet sind, umfasst,
**dadurch gekennzeichnet, dass**
die Brechungsindices der Übergangskernschicht (11) und der vierten Mantelschicht (5) jeweils $n_{11}$ und $n_5$ sind

und die relative Brechungsindexdifferenz $\Delta n_{11}$ zwischen $n_{11}$ und $n_5$ $\Delta n_{11} = \frac{ax^2}{100} lg\, a^x$ erfüllt,
wobei a der Übergangskoeffizient der Übergangskernschicht (11) ist und x die Distanz von einem beliebigen Punkt in der Übergangskernschicht (11) zu dem Rand der inneren Kernschicht (10) ist;
wobei der Wertebereich von a 1,05 ≤ a ≤ 1,3 ist;
wobei der Wertebereich von x 0 < x ≤ du und l,25 $\mu$m ≤ $d_{11}$ ≤ 2,50 $\mu$m ist, wobei du die Dicke der Übergangskernschicht (11) ist.

2. Single-Mode-Glasfaser mit ultraniedriger Dämpfung und einer großen effektiven Fläche nach Anspruch 1, wobei

$d_1$ der Durchmesser der Kernschicht (1) ist,
der Wertebereich des Verhältnisses des Außendurchmessers dz der ersten Mantelschicht (2) zu $d_1$ $5 \leq d_2/d_1 \leq 8$ ist;
der Wertebereich des Verhältnisses der Dicke $d_3$ der zweiten Mantelschicht (3) zu $d_1$ $0,2 \leq d_3/d_1 \leq 0,5$ ist;
der Wertebereich des Verhältnisses der Dicke $d_4$ der dritten Mantelschicht (4) zu $d_1$ gleichzeitig $1,0 \leq d_4/d_1 \leq 3,0$ ist,
wenn $d_2/d_1$ den Maximalwert einnimmt, nehmen $d_3/d_1$ und $d_4/d_1$ den Minimalwert ein; und wenn $d_2/d_1$ den Minimalwert einnimmt, nehmen $d_3/d_1$ und $d_4/d_1$ den Maximalwert ein.

3. Single-Mode-Glasfaser mit ultraniedriger Dämpfung und einer großen effektiven Fläche nach Anspruch 2, wobei der Wertebereich des Durchmessers $d_1$ der Kernschicht (1) $8,5 \, \mu m \leq d_1 \leq 13 \, \mu m$ ist.

4. Single-Mode-Glasfaser mit ultraniedriger Dämpfung und einer großen effektiven Fläche nach Anspruch 1, wobei der Wertebereich des Verhältnisses des Durchmessers $d_{40}$ von jeder Mikropore (40) zu der Dicke $d_4$ der dritten Mantelschicht (4) $0,25/m \leq d_{40}/d_4 \leq 0,4/m$ ist, wobei m die Gesamtanzahl der ringförmigen mikroporösen Schichten ist.

5. Single-Mode-Glasfaser mit ultraniedriger Dämpfung und einer großen effektiven Fläche nach Anspruch 1, wobei in jeder ringförmigen mikroporösen Schicht $d_{40}$ der Durchmesser von jeder Mikropore (40) ist, h die Distanz zwischen zwei benachbarten Mikroporen (40) ist, $\alpha$ ein durch die jeweils die Kreismittelpunkte der zwei benachbarten Mikroporen (40) mit dem Kreismittelpunkt der Kernschicht (1) verbindenden Linien gebildeter Winkel ist, L die Distanz der Kreismittelpunkte zwischen jeder Mikropore (40) und der Kernschicht (1) ist, dann erfüllt h die folgende Formel: $h = 2L\sin(o/2) - d_{40}$ und die Distanz h zwischen zwei benachbarten Mikroporen (40) in verschiedenen ringförmigen mikroporösen Schichten ist gleich.

6. Single-Mode-Glasfaser mit ultraniedriger Dämpfung und einer großen effektiven Fläche nach Anspruch 5, wobei der Wertebereich des eingeschlossenen Winkels $\alpha$ $15° \leq \alpha \leq 30°$ ist.

7. Single-Mode-Glasfaser mit ultraniedriger Dämpfung und einer großen effektiven Fläche nach Anspruch 1, wobei die innere Mantelschicht (10), die zweite Mantelschicht (3) und die vierte Mantelschicht (5) denselben Brechungsindex aufweisen.

8. Single-Mode-Glasfaser mit ultraniedriger Dämpfung und einer großen effektiven Fläche nach Anspruch 1, wobei das Alkalimetall Kalium und/oder Lithium ist.

9. Single-Mode-Glasfaser mit ultraniedriger Dämpfung und einer großen effektiven Fläche nach Anspruch 1, wobei der Wertebereich des Durchmessers $d_5$ der vierten Mantelschicht (5) $125 \, \mu m$ oder $124 \, \mu m$ ist.

10. Single-Mode-Glasfaser mit ultraniedriger Dämpfung und einer großen effektiven Fläche nach Anspruch 1, wobei der Durchmesser einer beschichteten Single-Mode-Glasfaser $235 \, \mu m \sim 260 \, \mu m$ beträgt.

11. Single-Mode-Glasfaser mit ultraniedriger Dämpfung und einer großen effektiven Fläche nach Anspruch 1, wobei, wenn eine Arbeitswellenlänge 1550 nm ist, eine Dämpfung der Single-Mode-Glasfaser 0,150 dB/km erreicht, ein Modenfelddurchmesser $13,5 \, \mu m$ erreicht und ein minimaler Biegeradius 10 mm erreicht, wenn ein zusätzlicher Verlust kleiner als 0,2 dB ist.

**Revendications**

1. Fibre optique monomode avec une atténuation ultrafaible et une grande surface effective, comprenant : une couche d'âme (1), une première couche de gaine (2), une deuxième couche de gaine (3), une troisième couche de gaine (4) et une quatrième couche de gaine (5) successivement disposées de l'intérieur vers l'extérieur ;
dans laquelle

la première couche de gaine (2) est constituée de quartz dopé au fluor ;
la deuxième couche de gaine (3), la troisième couche de gaine (4) et la quatrième couche de gaine (5) sont toutes constituées de quartz ;

la troisième couche de gaine (4) est pourvue d'au moins une couche annulaire microporeuse successivement disposée de l'intérieur vers l'extérieur, l'au moins une couche annulaire microporeuse comprend une pluralité de micropores (40) qui sont répartis uniformément, le centre du cercle de chaque micropore (40) dans chaque couche annulaire microporeuse est cocyclique et le cercle est concentrique avec la couche d'âme (1) ;

la couche d'âme (1) est constituée de quartz dopé par un métal alcalin, et la couche d'âme (1) comprend une couche d'âme interne (10) et une couche d'âme de transition (11) successivement disposées de l'intérieur vers l'extérieur ;

**caractérisée en ce que**

les indices de réfraction de la couche d'âme de transition (11) et de la quatrième couche de gaine (5) sont respectivement $n_{11}$ et $n_5$, et la différence relative d'indice de réfraction $Dn_{11}$ entre $n_{11}$ et $n_5$ satisfait

$$\Delta n_{11} = -\frac{ax^2}{100}\lg a^x$$

, où a est le coefficient de transition de la couche d'âme de transition (11), et x est la distance depuis n'importe quel point dans la couche d'âme de transition (11) jusqu'au bord de la couche d'âme interne (10) ;

dans laquelle la plage de valeurs de a est $1,05 \leq a \leq 1,3$ ;

dans laquelle la plage de valeurs de x est $0 \leq x \leq d_{11}$, et $1,25\ \mu m \leq du \leq 2,50\ \mu m$, où $d_{11}$ est l'épaisseur de la couche d'âme de transition (11).

2. Fibre optique monomode avec une atténuation ultrafaible et une grande surface effective selon la revendication 1, dans laquelle

le diamètre de la couche d'âme (1) est $d_1$ ;

la plage de valeurs du rapport entre le diamètre externe $d_2$ de la première couche de gaine (2) et $d_1$ est $5 \leq d_2/d_1 \leq 8$ ;

la plage de valeurs du rapport entre l'épaisseur $d_3$ de la deuxième couche de gaine (3) et $d_1$ est $0,2 \leq d_3/d_1 \leq 0,5$ ;

la plage de valeurs du rapport entre l'épaisseur $d_4$ de la troisième couche de gaine (4) et $d_1$ est $1,0 \leq d_4/d_1 \leq 3,0$ ; dans le même temps,

quand $d_2/d_1$ prend la valeur maximale, $d_3/d_1$ et $d_4/d_1$ prennent la valeur minimale ; et quand $d_2/d_1$ prend la valeur minimale, $d_3/d_1$ et $d_4/d_1$ prennent la valeur maximale.

3. Fibre optique monomode avec une atténuation ultrafaible et une grande surface effective selon la revendication 2, dans laquelle la plage de valeurs du diamètre $d_1$ de la couche d'âme (1) est $8,5\ \mu m \leq d_1 \leq 13\ \mu m$.

4. Fibre optique monomode avec une atténuation ultrafaible et une grande surface effective selon la revendication 1, dans laquelle la plage de valeurs du rapport entre le diamètre $d_{40}$ de chaque micropore (40) et l'épaisseur $d_4$ de la troisième couche de gaine (4) est $0,25/m \leq d_{40}/d_4 \leq 0,4/m$, où m est le nombre total des couches annulaires microporeuses.

5. Fibre optique monomode avec une atténuation ultrafaible et une grande surface effective selon la revendication 1, dans laquelle, dans chaque couche annulaire microporeuse, le diamètre de chaque micropore (40) est $d_{40}$, la distance entre deux micropores (40) adjacents est h, un angle inclus formé par les lignes reliant respectivement les centres des cercles des deux micropores (40) adjacents avec le centre du cercle de la couche d'âme (1) est a, la distance entre les centres des cercles entre chaque micropore (40) et la couche d'âme (1) est L, alors h satisfait la formule suivante : $h = 2L\sin(a/2) - d40$, et la distance h entre deux micropores (40) adjacents dans différentes couches annulaires microporeuses est égale.

6. Fibre optique monomode avec une atténuation ultrafaible et une grande surface effective selon la revendication 5, dans laquelle la plage de valeurs de l'angle inclus a est $15° \leq a \leq 30°$

7. Fibre optique monomode avec une atténuation ultrafaible et une grande surface effective selon la revendication 1, dans laquelle la couche d'âme interne (10), la deuxième couche de gaine (3) et la quatrième couche de gaine (5) ont le même indice de réfraction.

8. Fibre optique monomode avec une atténuation ultrafaible et une grande surface effective selon la revendication 1, dans laquelle le métal alcalin est le potassium et/ou le lithium.

9. Fibre optique monomode avec une atténuation ultrafaible et une grande surface effective selon la revendication 1, dans laquelle le diamètre $d_5$ de la quatrième couche de gaine (5) est de 125 $\mu$m ou 124 $\mu$m.

10. Fibre optique monomode avec une atténuation ultrafaible et une grande surface effective selon la revendication 1, le diamètre d'une fibre optique monomode revêtue étant de 235 $\mu$m~260 $\mu$m.

11. Fibre optique monomode avec une atténuation ultrafaible et une grande surface effective selon la revendication 1, dans laquelle, quand une longueur d'onde de travail est de 1550 nm, une atténuation de la fibre optique monomode atteint 0,150 dB/km, un diamètre de champ de mode atteint 13,5 $\mu$m, et un rayon de courbure minimal atteint 10 mm quand une perte supplémentaire est inférieure à 0,2 dB.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7283714 B1
- US 2016154175 A1
- US 2017371096 A1